# EUROPEAN PATENT SPECIFICATION

(11) **EP 2 024 277 B1**
(45) Date of publication and mention of the grant of the patent: **18.06.2014**
(21) Application number: 07747634.9
(22) Date of filing: 15.05.2007
(51) Int. Cl.: C01B 6/06, C01B 3/00

(54) **SYNTHESIS OF ALH3 AND STRUCTURALLY RELATED PHASES**
SYNTHESE VON ALH3 UND STRUKTURELL VERBUNDENEN PHASEN
SYNTHÈSE DE ALH3 ET PHASES STRUCTURELLEMENT APPARENTÉES

(30) Priority: 16.05.2006 NO 20062210
(43) Date of publication of application: 18.02.2009
(73) Proprietor: Institutt For Energiteknikk, 2027 Kjeller (NO)
(72) Inventor: Hauback, Bjorn C., 1900 Fetsund (NO); Brinks, Hendrik W., 1415 Oppegård (NO)
(74) Representative: Hatlen, Lars Erik
(86) International application number: PCT/NO2007/000173
(87) International publication number: WO 2007/133092

(56) References cited:
- WO-A1-00/76913
- WO-A1-00/76913
- US-A- 3 812 244
- US-A1- 2005 222 445
- US-A1- 2006 088 467
- BRINKS H W ET AL: "Synthesis and crystal structure of Na2LiAlD6", JOURNAL OF ALLOYS AND COMPOUNDS, ELSEVIER SEQUOIA, LAUSANNE, CH, vol. 392, no. 1-2, 19 April 2005 (2005-04-19), pages 27-30, XP027812864, ISSN: 0925-8388 [retrieved on 2005-04-19]

## Description

### Field of invention

The present invention relates to a method for the preparation of materials suitable for hydrogen storage. Such materials are able to effectively store and release large amounts of hydrogen. More specifically, the invention relates to the preparation of metal hydrides by mechanical mixing. These metal hydrides have also other uses such as reduction agent, starting substance for the preparation of metal coatings and as reactant for the preparation of new metal hydrides.

### Background of the invention

Restricted amounts of fossil fuels such as oil and natural gas have stimulated considerable efforts to find alternative energy sources and alternative energy carriers. Hydrogen is of great interest as energy carrier due to high energy density and because, like electricity, it can be produced in several ways without any influence on the user of the hydrogen. Energy can more easily be stored in large quantities as hydrogen than electric energy.

As a chemical fuel, hydrogen is unique since the reaction product of a fuel cell or internal combustion engine will be pure water and will not result in any local pollution. This provides a potential for environmetal benefits, since either hydrogen can be produced from renewable energy or the CO₂ generated as a by-product in the hydrogen production can be deposited from centralized production facilities.

Never the less, the storage of hydrogen gas is still a challenge, which may be accomplished under high pressure or as liquid hydrogen (-250°C). This is, however, energy demanding and impractical, and the attention is therefore focused on the storage of hydrogen in solid substances which absorb hydrogen in their crystal lattice. This hydrogen is released by increasing the temperature, and the effort is consentrated on obtaining the largest possible hydrogen density in respect of weight and volum, as well as obtaining satisfactory kinetics and costs.

Many so-called interstitial metal hydrides have been made, where hydrogen molecules are absorbed and distributed in voids in the metal structure as single atoms, but such hydrides have so far not been able to store more than about 2,5 % by weight of reversible hydrogen. The knowledge thereof has the last decade lead to the study of new materials, in particular so-called complex metal hydrides, where the hydrogen atoms are bound in anionic metal-hydrogen complexes with metals as counter-ions. In particular, this concerns AlH₄⁻, AlH₆³⁻, BH₄⁻,NH₂⁻, NH²⁻ and MgH₃⁻, but also other possibilities for complex hydrides exist. Many of these materials have a higher gravimetric hydrogen content and some also have suitable thermodynamic properties so that the pressure/temperature conditions, in theory, are well suited. However, for the present they do posess kinetic problems because complex hydrides often involves two or more solid phases in dehydrogenated or rehydrogenated state so that diffusion of metal containing species is necessary for the reactions to take place. Considerable research has been invested to find better catalysts and to understand how said catalysts are functioning, but so far NaAlH₄ having about 4 % by weight reversible hydrogen capacity at 150°C with near acceptable kinetics is the best that has been obtained. Complex metal hydrides based on nitrogen and boron do in theory have a higher capasity, but the temperature for reversibility with acceptable kinetics is substantially higher, especially for the boron compounds. Complex hydrides are therefore still not satisfactory for hydrogen storage systems for inter alia vehicles. Thus, this leaves plenty of room for improving the storage of hydrogen in solid substances.

Another compound of considerable interest as hydrogen storage material is aluminium hydride, AlH₃. This compound has a hydrogen content of 10.1 % by weight and this is released in one step. This may inter alia be utilized in rocket engines and considerable research has been carried out regarding AlH₃ for this purpose [F.M. Brower, J. Am. Chem. Soc. 98 (1976) 2450; N.E. Matzek et al, US 3.819.819; F.M. Brower et al, US 3.823.226; N.E. Matzek et al, US 3.883.644; J.A. Scruggs, US 3.801.657; W.M. King, US 3.810.974; R.D. Daniels, US 3.819.335]. Other areas of utilization is the use of AlH₃ as a chemical reduction agent, pyrotechnic components, polymerization catalyst and for making Al-coatings [M.A. Petrie et al, US 6,228,338]. Moreover, it is well suited as a reactant for making new metal hydrides, e.g. by grinding/ball milling [T.N. Dymova et al., Russ. J. Coord. Chem. 26 (2000) 531]. AlH₃ can crystallize in at least six different crystal structures [F.M. Brower et al., J. Am. Chem. Soc. 98 (1976) 2450], of which complete crystal structure is published only for one of the phases, α-AlH₃ [J.W. Turley et al., Inorg. Chem. 8 (1969) 18]. It consists of corner-sharing AlH₆ octahedrons. Therefore, α-AlH₃ may to a large extent be considered as a complex hydride, but does not have the problem of diffusion of metal atoms as an obstacle to the kinetics of other complex hydrides, such as Na₃AlH₆ and Na₂LiAlH₆.

US3812244 discloses the preparation of AlH3 by mixing at temperatures around the room temperature a metal hydride and a chloride where at least one the compounds contains Al.

The challenges of AlH₃ as hydrogen storage material are the thermodynamic properties which, in practice, makes impossible reversibility by means of gas pressure at or above room temperature, and that AlH₃ must be produced by a relatively cumbersome chemical procedure under inert atmosphere.

AlH₃ has typically been synthesized from LiAlH₄ and AlCl₃ in dietylether [F.M. Brower et al., J. Am. Chem. Soc. 98 (1976) 2450]. In a 3:1 proportion, LiCl and AlH₃x0, 25Et₂O is formed. LiCl is filtered off. Et₂O cannot be removed by heating without AlH₃ being hydrogenated, but can be removed under heating with excess of LiAlH₄, optionally in combination with LiBH₄, and often with the use of other solvents in addition. Then, AlH₃ is precipitated and dried. The crystal structure of the precipitated AlH₃ strongly depends on how this is performed (mixing ratio, temperature and time) and, then, the product must be purified and dried.

It is difficult to purely produce other structure modifications than α-AlH₃ with this method. In addition, it has also been tested some other combinations of hydrides and chlorides which give AlH₃ by corresponding methods [Ashby et al., J. Am. Chem. Soc. 95 (1973) 6485].

There is a need for a simpler method of preparation for AlH₃ and AlH₃-like phases, preferably also a method of preparation where several of the AlH₃-modifications can be prepared.

### Summary of the invention

The object of this invention is to find a simpler and more inexpensive synthesis method for the preparation of AlH₃ and related phases. This can be accomplished by mechanical mixing of hydrides together with halogenides such as chlorides in solid phase and without use of any solvent which may bind to the product. Preferably, both the hydride and the chloride should contain aluminium, but it is sufficient that one of them contains aluminium. Due to low thermal stability of AlH₃ and the often exothermic character of these reactions, the mechanical methods are preferably carried out at a lower temperature than room temperature.

### Detailed description of the invention

The present invention provides a method for the preparation of AlH₃ and structurally related compounds according to claim 1.

In an embodiment of the method, the mechanical mixing is carried out by crushing, milling and/or mortaring.

In a further embodiment of the method, the mechanical mixing is carried out at a temperature which is lower than room temperature.

In the method, of the invention the mechanical mixing is carried out without use of solvent, and in solid state.

In the method of the invention at least one of the metal hydrides or halogenides contains aluminium, preferably both at least one of both the metal hydrides and halogenides contain aluminium.

In a further embodiment of the method, the metal hydride used as starting substance is selected among complex hydrides containing AlH₄-, AlH₆³⁻, AlH₅²⁻, BH₄⁻ and NH₂⁻ with alkali metals, alkaline-earth metals and transition metals as counter-ions, particularly alkali metals and alkaline-earth metals, or binary metal hydrides of alkali metals, alkaline-earth metals and 3d transition metals, particularly alkali metals and alkaline-earth metals.

In a further embodiment of the method, the halogenide used as starting substance is halogenide of alkali metal, alkaline-earth metal, transition metal, Al, Ga or In.

In a further embodiment of the method, the structure modifications of AlH₃ are selected among α-AlH₃, α'-AlH₃, β-AlH₃ and γ-AlH₃.

In a further embodiment of the method, seed crystals are added together with the starting substances to speed up the formation of product having desired crystal structure.

In the method of the invention, the by-product, a halogenide, is removed by means of a solvent without the material produced being dissolved.

In a further embodiment of the method, the aluminium containing hydrides, having a composition different from AlH₃, which are structurally related to the structure modifications of AlH₃, are obtained by the stabilization of AlH₃ by partly substituting Al therein with one or more metals selected among alkali metals, alkaline-earth metals, transition metals, B, Ga and In and/or by placing one or more metals selected among alkali metals, alkaline-earth metals, transition metals, B, Ga and In in interstitial positions.

The invention relates to the preparation of metal hydrides of the type AlH₃ or metal hydrides which structurally may be related to one of the structure modifications of AlH₃. Previously, in most cases this has been done by a reaction between 3LiAlH₄ and AlCl₃ in dietylether with the formation of AlH₃ bounded to diethylether: AlH₃x0, 25Et₂O, with a subsequent filtration and addition of LiAlH₄/LiBH₄ to remove Et₂O during heating with a subsequent presipitation and drying [F.M. Brower et al., J. Am. Chem. Soc. 98 (1976) 2450].

The invention relates to a substantial simplification of the method of synthesis of AlH₃ and structurally related compounds and does also make a less demand to laboratory equipment. The object of the method is chemical reaction by mechanically mixing the reactants in the form of powder by means of a crushing/grinding/mortaring process. This may be carried out e.g. by a planetary ball mill where a beaker filled with balls and powder rotates in an asymmetric manner so that the powders become mixed and crushed or a mill where a piston reciprocates in a cylindrical test chamber. In both cases there is obtained good mixing and formation of new clean surfaces and defects leading to good reactivity. The desired chemical reactions may therefore take place during the mill procedure itself.

The desired reactions for the synthesis of AlH₃ must be thermodynamically favourable to take place, and because gas evolution normally does not occurre in these reactions, they will in many cases be exothermic. AlH₃ is not very thermally stable and dehydrogenation during ball milling must be avoided. This may be accomplished by cooling by means of liquid nitrogen (-196°C). Then a lower local temperature is obtained where the crushing process takes place and the mobility of the atoms is smaller so that the decomposition is less likely to occur. A positiv additional effect of cooling is that the materials become more brittle and thereby become crushed into smaller particles so that the diffusion paths for the solid-state reactions become shorter.

The material prepared according to the above method is characterized in that the aluminium containing hydrides have a composition different from AlH₃, but are structurally related to the structure modifications of AlH₃ in that Al is partially substituted with one or more metals selected among alkali metals, alkaline-earth metals, transition metals, B, Ga and In and/or in that one or more metals selected among alkali metals, alkaline-earth metals, transition metals, B, Ga and In are placed in interstitial positions in the actual AlH₃ structure modification.

An AlH₃ structure modification is stabilized as a consequence of the addition of one or more metals thereto.

The new materials prepared according to the method of the invention are structurally related to one of the structure modifications of AlH₃, e.g. in that parts of Al are exchanged with other metals and/or that other metals are taken up in interstitial positions in the crystal structure. The metals can be one or more alkali metal, alkaline-earth metal, transition metal, B, Ga or In and will principally be added by replacing parts of the halogenide so that this metal is absorbed in the AlH₃ structure. This will lead to a change of stability. Increased stability would be strongly favourable for reversable hydrogen storage.

The α-AlH₃ structure is known [J.W. Turley et al., Inorg. Chem. 8 (1969) 18]. In addition thereto, the present inventors have identified the structure of two of the other structure modifications, α'-AlH₃ and β-AlH₃. All these phases consist of AlH₆ octahedra connected by corner-sharing of all corners with one other octahedron. In these three phases, the binding is done in different ways. The crystallization of the known AlH₃ phases in AlH₆ octahedra shows that AlH₃ has much in common with complex hydrides such as Na₃AlH₆ [E. Rønnebro et al. J Alloys Compd. 299 (2000) 101], Na₂LiAlH₆ [H.W. Brinks et al., J. Alloys Compd. 392 (2005) 27] and Li₃AlH₆ [H.W. Brinks et al. J. Alloys Compd. 354 (2003) 143] which are all based on isolated AlH₆³⁻ ions. It can be observed e.g. from the crystal structure that if starting with α-AlH₃ and replacing half of the Al with Li, and then inserting Na in interstitial positions as a charge compensation, Na₂LiAlH₆ having correct crystal structure is obtained. Thus, Na₂LiAlH₆ is to be regarded as stabilized α-AlH₃.

The material prepared according to the method of the invention is useful for hydrogen storage for use in fuel cell or internal combustion engine, rocket fuel, pyrotechnic compounds, reduction agent in any connection where a hydride-donor is suitable to generate a reduction, metal coating, polymerization catalyst and as starting substance for the synthesis of other metal hydrides.

In addition to mixing 3LiAlH₄ + AlCl₃, many other combinations of hydrides and halogenides which may give AlH₃ exist. Both of the reactants may be replaced, either separately or together, but one of the reactants must contain aluminium. LiAlH₄ may be replaced by other complex hydrides containing AlH₄-, AlH₆³⁻, AlH₅²⁻, BH₄⁻ and NH₂⁻ with alkali metals, alkaline-earth metals and transition metals as counter ions, particularly alkali metals and alkaline-earth metals. LiAlH₄ may also be replaced by binary hydrides of alkali metals, alkaline-earth metals and 3d transition metals, particularly alkali metals and alkaline-earth metals. AlCl₃ may be replaced by AlBr₃ and AlI₃ or halogenides from alkali, alkaline-earth, transition metals, Ga or In. In all these reactions between halogenide and hydride, in addition to AlH₃, a halogenide as by-product will also be obtained.

In some areas of utilization like e.g. as reduction agent, metal coating, catalyst or starting substance for other metal hydrides, it is in many cases likely that the product after ball milling may be used directly without further purification. For other areas of utilization, a purification would be favourable. This can be done by selectively dissolving the by-product without dissolving AlH₃, e.g. dissolving LiCl may be envisioned by using crown ethers.

As mentioned above, AlH₃ may be formed from many combinations of starting substances, and this will result in different structure modifications of AlH₃. It is also probable that which structure modification that crystallizes may be influenced by seed crystals of the correct structural type, either by adding to the reactants some of the desired product or by adding other compounds having the same structure. I.a., FeF₃ may have the same crystal structure as β-AlH₃ (X-ray diffraction data show that it has pyrochloro-type structure), so that it is likely that finely divided FeF₃ will lead to larger amounts of β-AlH₃ in the product. For the same reason, it is likely that seed crystals of β-AlF₃ will lead to larger amounts of α'-AlH₃ in the product.

In comparative Example 1, ball milling of 3LiAlD₄ + AlCl₃ at room temperature is described. The formation of 4AlD₃ + 3LiCl (using the ¹H isotope) has an enthalpy of -213 kJ/mol and a Gibbs' free energy of -191 kJ/mol. This spontaneous reaction leeds to a local increase of temperature which may reach several hundred degrees Celcius in a confined and independent system, i.e. if the heat is not led away. Measurements of pressure during ball milling clearly shows that the temperature suddenly increases, i.e. that when the reaction occurs it proceeds quickly and it takes some time for the ball mill equipment to absorb this heat. It is observed from X-ray diffraction characterization of the product that some α-AlH₃ and α'-AlH₃ is present in the product afterwards, in addition to Al (and LiCl which is a by-product). This indicates that the desired reaction has taken place, but that a partial thermal decomposition has taken place thereafter as a result of the heat from the first reaction. The temperature during the crushing may also reach about 60°C without any chemical reaction taking place due to heat of friction in case of crushing with high intensity. Therefore, cooling is desirable during the mechanical mixing/crushing.

In Example 2 a strong cooling was selected in this process, by using liquid nitrogen as cooling agent. Liquid nitrogen which has a boiling point of -196°C. Also at this temperature, the desired reaction is spontaneous. Characterization by neutron diffraction shows that this reaction has taken place without the formation of Al metal, which occurs in thermal decomposition.

There are several reasons why the invention works. The reaction is spontanous. Milling/crushing yields a smaller particle size, clean surfaces, defects and local increase of temperature which all together makes the reaction possible. At reduced temperature even smaller particle size is obtained due to the brittleness of the materials, reduced mobility and thereby reduced chance for decomposition of a relatively unstable product in addition to a lower maximum temperature during the entire process. It is therefore possible to carry out solid-state reactions at about -200°C in 5 minutes. In industrial processes, a smaller extent of cooling than what appears from Example 2 will be of relevance.

### Brief description of the figures

- Fig. 1:: In-situ measurement of pressure during ball milling of 3LiAlD₃ + AlCl₃. In the insert, the pressure has been recalculated into amount of evoluted D₂ gas in fraction of D-content of LiAlD₄ at the time of gas evolution/temperature fluctuation.

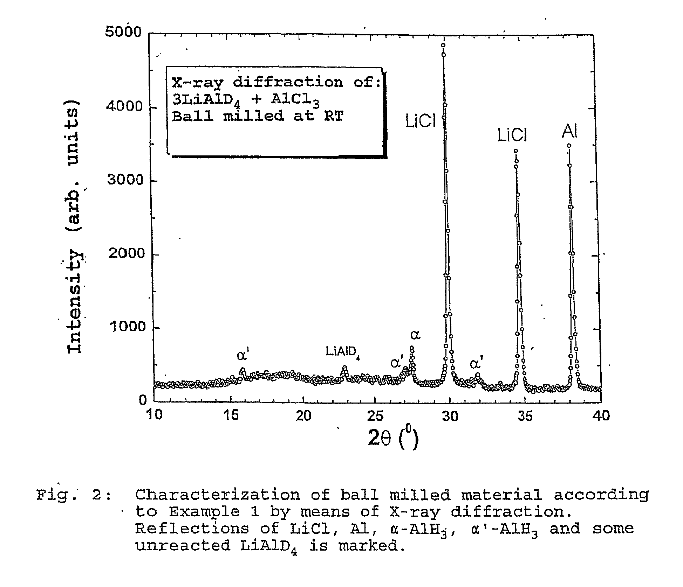

- Fig. 2:: Characterization of ball milled material according to Example 1 by means of X-ray diffraction. Reflections of LiCl, Al, α-AlH₃ and α'-AlH₃ are marked.
- Fig. 3:: Observed intensities (circles) and calculated intensities from Rietveld refinements (upper line) of powder neutron diffraction data of milled/crushed 3LiAlD₄ + AlCl₃ during cooling in liquid nitrogen. Positions of Bragg reflections are indicated by vertical lines for LiCl, α-AlH₃ and α'-AlH₃ (from the top). The difference between observed and calculated intensity is indicated by the bottom line. About 66% of AlH₃ is present as α-AlH₃ and the rest as α'-AlH₃.
- Fig. 4:: Crystal structure of a) α-AlH₃ and b) α'-AlH₃ determined from the powder neutron diffraction data shown in Fig. 3. The thick solid lines limit the smallest repeating unit for the crystal structure, the unit cell.

### Industrial applicability

The material prepared according to the method of the invention is particularly useable for the storage of hydrogen in connection with vehicles and filling stations. It is also useful for rocket fuel, pyrotechnic components, reduction agent in any connection where a hydride-donor is suitable to generate a reduction, metal coating, polymerization catalyst and as starting substance for the synthesis of other metal hydrides.

### Examples

### Comparative example 1

As a first example, LiAlD₄ (0,972 g) and AlCl₃ powder (1,028 g) (3:1 molar ratio) were mixed in Ar atmosphere and mechanically milled/crushed in a planetary ball mill of the type Fritsch P6 with 100 balls of 4 g. Consequently, ball to powder mass ratio was 200:1. The ball milling was carried out under Ar atmosphere at room temperature for one hour with 500 revolutions per minute. During the ball milling, the development of the pressure was monitored by means of a built-in pressure gauge which transmits the pressure readings by means of radio waves. In the case of changes in the pressure, the pressure is measured more frequently and max speed of measurement every 22 milliseconds.

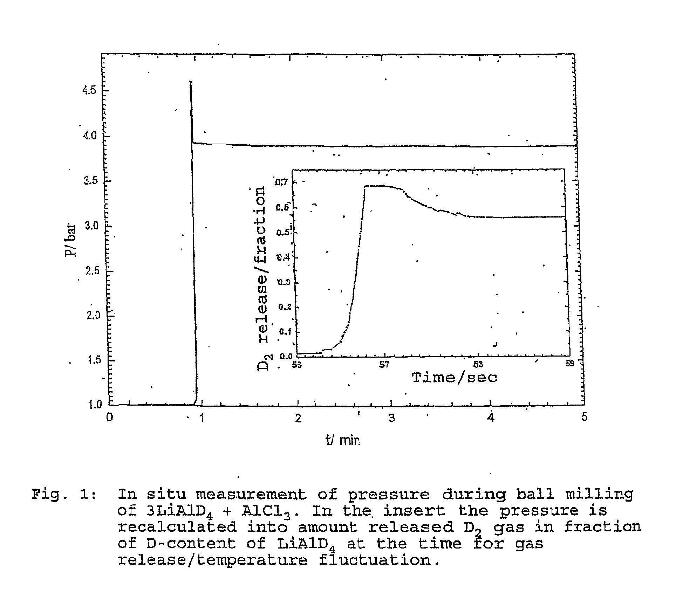

The ball milling did not result in any substantial development of pressure until after about one minute , cf. fig. 1. Then, the pressure rose during half a second to the maximum pressure of 4,6 bar which could be detected, before it gradually during the next second stabilized at 3,88 bar. The only possible definition for this maximum of pressure is that the temperature has increased as a result of an exothermic chemical reaction. The pressure, which is approximately linear with the temperature, is raised until the heat of reaction is absorbed by the balls and the ball mill beaker. In this example, this takes about one second. Characterization by means of X-ray diffraction shows that Al, α-AlD₃ and α'-AlD₃ have been formed, in addition to LiCl. Both the reaction of AlD₃ and LiCl (4:3 ratio) and the reaction of Al, D₂ and LiCl (4:6:3 ratio) are exothermic. The temporary increase of pressure to more than 4,6 bar in relation to a final pressure of 3,88 bar, indicates a temporary increase of pressure to at least 75°C. In other similar tests, but with a smaller amount of sample, the temporary increase of pressure was more than 50% higher than the final pressure, which indicates at least 150°C average gas temperature in the ball mill beaker. At this temperatures AlD₃ is unstable and will decompose into aluminium and hydrogen. The decomposition is endothermic and will also have a cooling effect. This example shows that it is possible to make AlD₃ by a mixing/crushing/grinding process of 3LiAlD₄ + AlCl₃. But it cannot for certain be unambigously established whether the reaction first moves completely to 4AlD₃ + 3LiCl before the thermal decomposition into aluminium and hydrogen partially occurs, or if both reactions to AlD₃ and directly to Al proceed simultanously in different parts of the sample.

### Example 2

A second example that AlH₃ may be formed by mixing/crushing/milling of a hydride and a halogenide is by using lower temperature during the crushing process. LiAlD₄ (0,486 g) and AlCl₃ powder (0,514 g) (3:1 molar ratio) was blended in Ar atmosphere and mechanically milled/crushed in a SPEX 7650 Freezer Mill with a piston of 32 g to 1 g sample. In the freezer mill liquid nitrogen at about -196°C was used as cooling agent and the milling time was 5 minutes.

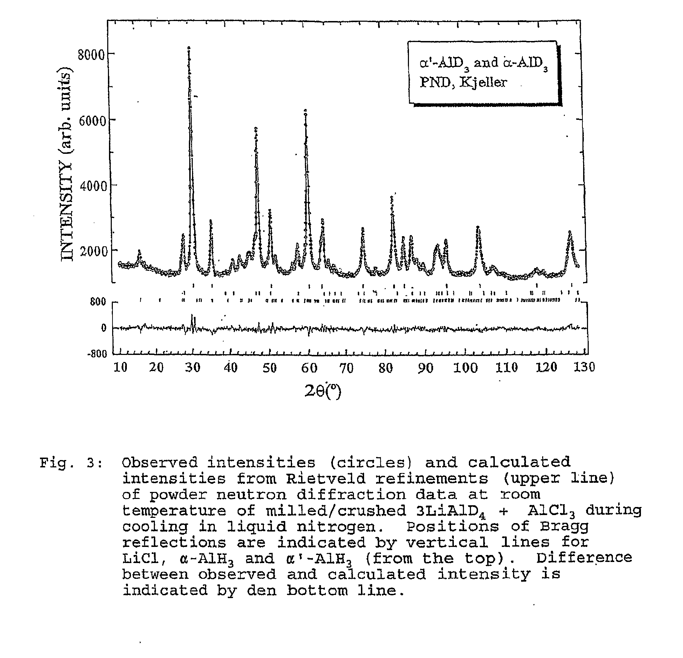

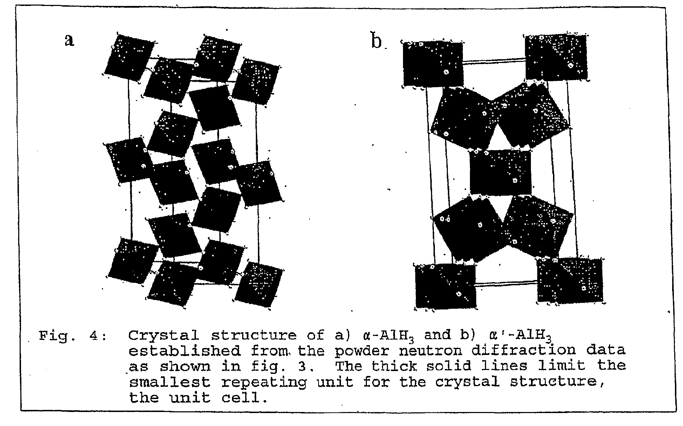

After having transferred the sample in Ar to a vanadium sample holder, powder neutron diffraction was carried out on the sample, cf. Fig. 3. The sample is completely free of metallic Al, and contains only AlD₃ and LiCl. Based on quantitative phase analysis with the powder neutron diffraction data, the amount of α-AlD₃ was established to 66% and the amount of α'-AlD₃ 34%. Complete formation of AlD₃ has in this case been accomplished and the crystal structure of α'-AlD₃ could be solved, cf. Fig. 4. α'-AlD₃ consists of corner-sharing AlD₆-octahedra. The corners are shared so that large pores through the material arise. The structure is related to bronze structures and β-AlF₃. The structure of α-AlD₃ was also determined to be in accordance with the model of Turley et al. [J.W. Turley et al., Inorg. Chem. 8 (1969) 18].

### Example 3

In a third example that AlH₃ may be formed by chemical reaction during mechanical mixing, NaAlH₄ (0,549 g) and AlCl₃ (0,451 g) in 3:1 molar ratio was blended in Ar atmosphere and crushed in a SPEX 7650 Freezer Mill with a piston of 32 g. In the freezer mill liquid nitrogen at about -196°C was used as cooling agent and the milling time was 60 min. Charaterization by powder X-ray diffraction showed that AlH₃ and LiCl was formed and AlH₃ divided itself between about 50% α-AlH₃ and 50% α'-AlH₃.

## Claims

1. A method for the preparation of a material which is aluminum hydride (AlH3) material, aluminum hydride material having an AlH3 structure modification or aluminum-containing hydride material having a structure that is related to the structure of AlH3, the method comprising:
mechanically mixing one or more metal hydrides and one or more halogenides,
wherein at least one of the metal hydride and the halogenide contains aluminium; and
chemically reacting said one or more metal hydrides and said one or more halogenides during the mechanical mixing thereof,
wherein the mechanical mixing is carried out in a solid state and without the use of a solvent, at a temperature which is lower than room temperature by using liquid nitrogen as cooling agent, and
wherein the by-product, a halogenide, is removed by means of a solvent without the material prepared being dissolved.

2. The method according to claim 1, wherein the mechanical mixing is carried out by crushing, milling and/or mortaring.

3. The method according to claims 1-2, wherein both the metal hydride and halogenide contain aluminum.

4. The method according to claims 1 - 3, wherein the metal hydride used as starting substance is selected among complex hydrides containing AlH₄-, AlH₆³⁻, AlH₅²⁻, BH₄⁻ and NH₂⁻ with alkali metals, alkaline-earth metals and transition metals as counter-ions, particularly alkali metals and alkaline-earth metals, or binary metal hydrides of alkali metals, alkaline-earth metals and 3d transition metals, particularly alkali metals and alkaline-earth metals.

5. The method according to claims 1 - 4, wherein the halogenide used as starting substance is halogenide of alkali metal, alkaline-earth metal, transition metal, Al, Ga or In.

6. The method according to claims 1 - 5, wherein the structure modifications of AlH₃ is selected among α-AlH₃, α'-AlH₃, β-AlH₃ and γ-AlH₃.

7. The method according to claims 1 - 6, wherein seed crystals are added together with the starting substances to speed up the formation of product having desired crystal structure.

8. The method according to claim 1, wherein the aluminium containing hydrides, having a composition different from AlH₃, which are structurally related to the structure modifications of AlH₃ are obtained by stabilizing AlH₃ by partially substituting Al therein with one or more metals selected among alkali metals, alkaline-earth metals, transition metals, B. Ga and In and/or by placing one or more metals selected among alkali metals, alkaline-earth metals, transition metals, B, Ga and In in interstitial positions.

## Patentansprüche

1. Verfahren zum Herstellen eines Materials, bei dem es sich um Aluminiumhydrid-(AlH3)-Material, Aluminiumhydridmaterial mit einer AlH3-Strukturmodifikation oder aluminiumhaltiges Hydridmaterial mit einer Struktur handelt, die mit der Struktur von AlH3 verwandt ist, wobei das Verfahren umfasst:
mechanisches Mischen einer oder mehrerer Metallhydride und eines oder mehrerer Halogenide,
wobei zumindest eines des Metallhydrids und des Halogenids Aluminium enthält, und
chemisches Reagieren des einen oder der mehreren Metallhydride und des einen oder der mehreren Halogenide während des mechanischen Mischens derselben,
wobei das mechanische Mischen in einem Festzustand und ohne die Verwendung eines Lösungsmittels bei einer Temperatur unter Raumtemperatur unter Verwendung von flüssigen Stickstoff als Kältemittel durchgeführt wird, und
wobei das Nebenprodukt, ein Halogenid, mithilfe eines Lösungsmittels entfernt wird, ohne dass das hergestellte Material aufgelöst wird.

2. Verfahren nach Anspruch 1, wobei das mechanische Mischen durch Zerkleinern, Mahlen und/oder Mörsern durchgeführt wird.

3. Verfahren nach den Ansprüchen 1 bis 2, wobei sowohl das Metallhydrid als auch das Halogenid Aluminium enthält.

4. Verfahren nach den Ansprüchen 1 bis 3, wobei das als Ausgangssubstanz verwendete Metallhydrid aus Komplexhydriden ausgewählt ist, die AlH₄₋, AlH₆³⁻, AlH₅²⁻, BH₄₋ und NH₂₋ mit Alkalimetallen, Erdalkalimetallen und Übergangsmetallen als Gegenionen, insbesondere Alkalimetallen und Erdalkalimetallen, oder binären Metallhydriden von Alkalimetallen, Erdalkalimetallen und 3D-Übergangsmetallen, insbesondere Alkalimetallen und Erdalkalimetallen, enthalten.

5. Verfahren nach den Ansprüchen 1 bis 4, wobei das als Ausgangssubstanz verwendete Halogenid Halogenid von Alkalimetall, Erdalkalimetall, Übergangsmetall, Al, Ga oder In ist.

6. Verfahren nach den Ansprüchen 1 bis 5, wobei die Strukturmodifikationen von AlH₃ aus α-AlH₃, α'AlH₃, β-AlH₃ und γ-AlH₃ ausgewählt sind.

7. Verfahren nach den Ansprüchen 1 bis 6, wobei Impfkristalle gemeinsam mit den Ausgangssubstanzen hinzugefügt werden, um die Bildung von Produkt mit der gewünschten Kristallstruktur zu beschleunigen.

8. Verfahren nach Anspruch 1, wobei die aluminiumhaltigen Hydride eine Zusammensetzung aufweisen, die sich von AlH3 unterscheidet, die mit den Strukturmodifikationen von AlH₃ strukturell verwandt sind, durch Stabilisieren von AlH₃ erhalten werden, indem Al darin teilweise mit einem oder mehreren Metallen substituiert wird, die aus Alkalimetallen, Erdalkalimetallen, Übergangsmetallen, B, Ga und In ausgewählt sind, und/oder indem ein oder mehrere Metalle, die aus Alkalimetallen, Erdalkalimetallen, Übergangsmetallen, B, Ga und In ausgewählt sind, in interstitielle Positionen platziert werden.

## Revendications

1. Procédé pour la préparation d'une matière qui est une matière hydrure d'aluminium (AlH₃), une matière hydrure d'aluminium ayant une modification de la structure d'AlH₃ ou une matière hydrure contenant de l'aluminium ayant une structure qui est corrélée à la structure d'AlH₃, le procédé comprenant :
- mélanger mécaniquement un ou plusieurs hydrures métalliques et un ou plusieurs halogénures, au moins l'un parmi l'hydrure métallique et l'halogénure contenant de l'aluminium ; et
- faire réagir chimiquement ledit ou lesdits hydrures métalliques et ledit ou lesdits halogénures pendant le mélange mécanique de ceux-ci,
- le mélange mécanique étant effectué dans un état solide et sans l'utilisation d'un solvant, à une température qui est inférieure à la température ambiante par l'utilisation d'azote liquide comme agent de refroidissement, et
- le sous-produit, un halogénure, étant retiré au moyen d'un solvant sans que la matière préparée ne soit dissoute.

2. Procédé selon la revendication 1, dans lequel le mélange mécanique est effectué par écrasement, broyage et/ou écrasement au mortier.

3. Procédé selon l'une des revendications 1 et 2, dans lequel à la fois l'hydrure métallique et l'halogénure contiennent de l'aluminium.

4. Procédé selon l'une des revendications 1 à 3, dans lequel l'hydrure métallique utilisé comme substance de départ est choisi parmi les hydrures complexes contenant AlH₄⁻, AlH₆³⁻, AlH₅²⁻, BH₄⁻ et NH₂⁻ avec des métaux alcalins, des métaux alcalino-terreux et des métaux de transition comme contre-ions, en particulier des métaux alcalins et des métaux alcalino-terreux, ou des hydrures métalliques binaires de métaux alcalins, de métaux alcalino-terreux et de métaux de transition 3d, en particulier des métaux alcalins et des métaux alcalino-terreux.

5. Procédé selon l'une des revendications 1 à 4, dans lequel l'halogénure utilisé comme substance de départ est un halogénure de métal alcalin, de métal alcalino-terreux, de métal de transition, d'Al, de Ga ou d'In.

6. Procédé selon l'une des revendications 1 à 5, dans lequel les modifications de structure d'AlH₃ sont choisies parmi α-AlH₃, α-AlH₃, β-AlH₃ et γ-AlH₃.

7. Procédé selon l'une des revendications 1 à 6, dans lequel des cristaux d'ensemencement sont ajoutés conjointement avec les substances de départ pour accélérer la formation d'un produit ayant la structure cristalline souhaitée.

8. Procédé selon la revendication 1, dans lequel les hydrures contenant de l'aluminium, ayant une composition différente d'AlH₃, qui sont corrélés structuralement aux modifications de structure d'AlH₃ sont obtenus par stabilisation d'AlH₃ par substitution partielle d'Al dans celui-ci par un ou plusieurs métaux choisis parmi les métaux alcalins, les métaux alcalino-terreux, les métaux de transition, B; Ga et In et/ou par placement d'un ou plusieurs métaux choisis parmi les métaux alcalins, les métaux alcalino-terreux, les métaux de transition, B, Ga et In dans des positions interstitielles.
